# EUROPEAN PATENT SPECIFICATION

(11) **EP 1 657 050 B1**
(45) Date of publication and mention of the grant of the patent: **12.12.2007**
(21) Application number: 05022799.0
(22) Date of filing: 19.10.2005
(51) Int. Cl.: B29D 30/60, B29D 30/30, B60C 19/08

(54) **Producing method of pneumatic tire**
Verfahren zur Herstellung eines Luftreifens
Procédé de production d'un pneu

(30) Priority: 11.11.2004 JP 2004327990
(43) Date of publication of application: 17.05.2006
(73) Proprietor: Sumitomo Rubber Industries Ltd, Kobe-shi, Hyogo-ken (JP)
(72) Inventor: Miki, Youjiro c/o Sumitomo Rubber Ind., Ltd., Kobe-shi Hyogo-ken (JP)
(74) Representative: Manitz, Finsterwald & Partner GbR

(56) References cited:
- EP-A- 0 747 243
- EP-A- 0 873 852
- EP-A- 0 875 366
- EP-A- 1 175 992
- US-A1- 2001 035 255
- US-A1- 2003 102 088
- PATENT ABSTRACTS OF JAPAN vol. 2003, no. 12, 5 December 2003 (2003-12-05) -& JP 2003 326614 A (BRIDGESTONE CORP), 19 November 2003 (2003-11-19)
- PATENT ABSTRACTS OF JAPAN vol. 2002, no. 06, 4 June 2002 (2002-06-04) -& JP 2002 046194 A (BRIDGESTONE CORP), 12 February 2002 (2002-02-12)

## Description

### BACKGROUND OF THE INVENTION

The present invention relates to a producing method of a pneumatic tire capable of discharging static electricity of a vehicle to a road surface.

In recent years, silica is mixed in a tread rubber of a pneumatic tire. Silica has merits that it reduces a rolling resistance of a tire and enhances wet grip performance. However, since silica is inferior in conductivity, electrical resistance of the tire is increased. If a tire has a great electrical resistance, static electricity is accumulated in the vehicle, and interference such as radio noise is prone to be generated.

Conventionally, to prevent the static electricity from being accumulated in a vehicle, Japanese published patent application No. JP-A-9-071112 a tread rubber a1 as shown in Fig. 13(A). The tread rubber a1 includes a base rubber portion b made of conductive carbon-rich rubber, a cap rubber layer c made of non-conductive silica-rich rubber disposed outside of the base rubber portion b. The base rubber portion b includes a base portion b1 which is located inside of the cap rubber layer c, and a through-terminal b2 which projects from the base portion b1 radially outward of the tire, penetrates through the cap rubber layer c and is exposed on a ground face. The tread rubber a1 can discharge the static electricity of the vehicle from the rim to the road surface through the base portion b1 and the through-terminal b2 of the rubber layer b.

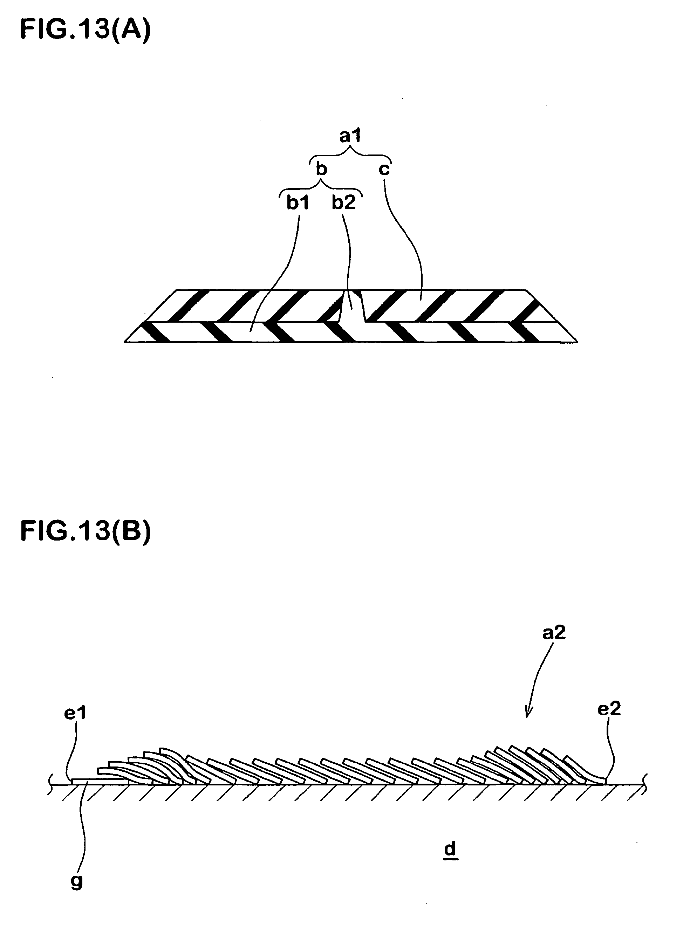

In recent years, a so-called strip winding type tread rubber has been proposed. For example, in Japanese published patent application No. 2000-94542, a tread comprising a strip winding type tread rubber a2 is formed by spirally winding, around a center shaft of a cylindrical to-be-wound body d, a ribbon-like unvulcanized rubber strip g which is continuously supplied from an extruder as shown in Fig. 13(B). As compared with the integral extruding type shown in Fig. 13(A), in this tread rubber a2, a splice for connecting both ends of the tread rubber is not generated. Further, there is a merit that the rubber extrudates carried in stock can be reduced, and space in a factory can be saved. However, since the rubber strip g of the tread rubber a2 is continuously wound, it is difficult to provide the conductive through-terminal.

US 2001/035255 A1 discloses a method for producing a pneumatic tire in which its tread portion includes an inner conductive portion which is in conduction with the rim when the rim is assembled, and an annular rubber portion whose inner peripheral surface is in contact with the inner conductive portion and whose outer peripheral surface comes into contact with the road surface, the method comprising a rubber forming step for forming a cylindrical unvulcanized rubber portion by spirally winding a ribbon-like unvulcanized rubber strip around a centre shaft of a substantially cylindrical to-be-wound body using a non-conductive rubber strip and a conductive rubber strip which may be wound simultaneously. A similar method is disclosed by EP-A-0 875 366. A further method for producing a pneumatic tire is disclosed by EP-A-0 873 852.

### SUMMARY OF THE INVENTION

It is an object of the present invention to provide a method of efficiently producing a pneumatic tire which can discharge static electricity of a vehicle to a road surface while employing the strip winding method.

This object is achieved by a method having the features of claim 1. Further embodiments of the invention are defined by the subclaims.

In this manner, the conductive rubber strip and the non-conductive rubber strip can be wound simultaneously. Thus, as compared with a method in which both the strips are separately wound with time lag, the productivity can be enhanced. Since the rubber strips are guided to predetermined winding positions of the to-be-wound body by the mutually independent first applicator and second applicator, it is possible to independently and freely control the shape, the winding position and/or spiral pitch of each of the rubber strips without a disadvantage that one rubber strip affects the other rubber strip.

In addition, the using ratio of the conductive rubber strip can be reduced to the minimum amount that is required for discharging static electricity. This is of help for producing tread rubbers in which merits of the non-conductive silica-rich rubber strip, such as excellent wet performance and low rolling resistance, are exhibited sufficiently, while securing its conductivity. To reduce the using ratio of the conductive rubber strip is to reduce the bonding interface between the conductive rubber strip and the non-conductive rubber strip having different rubber compositions. Generally, in a bonding interface between two kinds of rubber having different compositions, peeling off or the like is prone to be generated due to adhesion failure after vulcanization. If the interface is reduced, the durability of the tread rubber is enhanced.

The conductive rubber strip is wound such as to form a conductive path which is continuous from the inner peripheral surface to the outer peripheral surface of the cap rubber portion. Thus, static electricity accumulated in a vehicle can be discharged to the road surface from the inner conductive portion through the conductive rubber strip irrespective of the wear state. Thus, according to the present invention, it is possible to easily produce a pneumatic tire capable of discharging static electricity of a vehicle to a road surface with excellent productivity without deteriorating the excellent productivity of the strip winding method.

The cap rubber forming step further comprises
a step for stopping the winding of the non-conductive rubber strip, and a step for superposing the conductive rubber strip on the non-conductive rubber strip and fixing at least a portion of the conductive rubber strip to the to-be-wound body such that the portion comes into contact with the to-be-wound body, and
in the simultaneous winding step, the superposed non-conductive rubber strip and conductive rubber strip can be simultaneously wound around the to-be-wound body toward the other side.

The cap rubber forming step can further comprise a step for stopping the winding of the non-conductive rubber strip and the conductive rubber strip after the conductive path is formed in the simultaneous winding step, and a step for cutting the conductive rubber strip and winding only the non-conductive rubber strip around the to-be-wound body toward the other side.

In the simultaneous winding step, a spiral pitch of the conductive rubber strip can be greater than a spiral pitch of the non-conductive rubber strip.

### BRIEF DESCRIPTION OF THE DRAWINGS

Fig. 1 is a sectional view of a pneumatic tire produced in accordance with a method of the present invention;

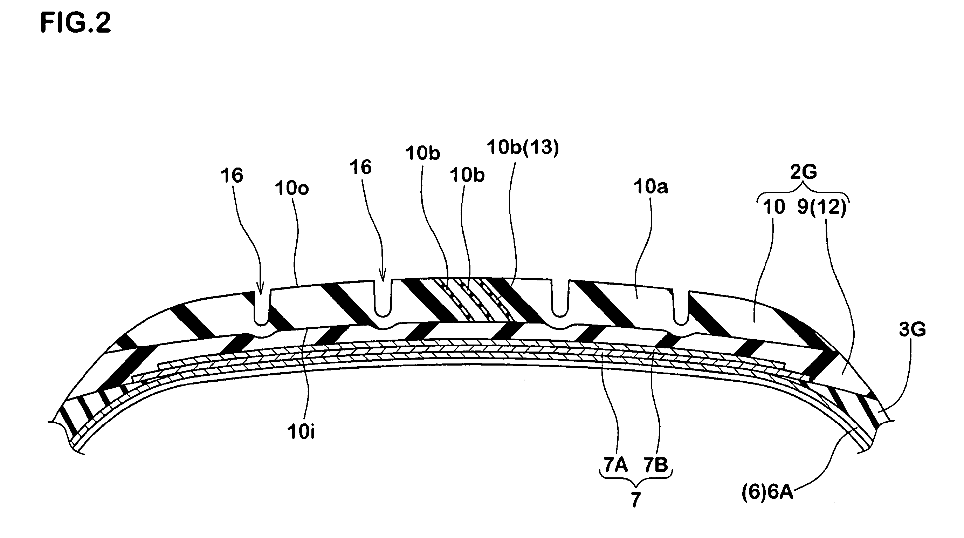

Fig. 2 is an enlarged sectional view of a tread portion of the pneumatic tire;
Fig. 3 is a perspective view showing one example of a forming apparatus of a tread rubber;
Fig. 4 is a schematic side view of the forming apparatus;
Fig. 5 is a perspective view showing one example of a rubber strip;
Figs. 6(A) and 6(B) are schematic sectional views used for explaining a forming step of a cap rubber portion;
Fig. 7 is a plan view used for explaining the forming step of the cap rubber portion;
Fig. 8 is a sectional view taken along the line A-A in Fig. 7;
Fig. 9 is a schematic sectional view used for explaining a simultaneous winding step;
Fig. 10 is a sectional view of a wound cap rubber portion;
Fig. 11 is a schematic sectional view of the simultaneous winding step according to another embodiment of the present invention;
Fig. 12 is a schematic sectional view conceptually showing a measuring apparatus of electrical resistance of the tire; and
Figs. 13(A) and 13(B) are schematic sectional view of a tread rubber used for explaining background art.

### DETAILED DESCRIPTION OF THE PREFERRED EMBODIMENTS

An embodiment of the present invention will be explained based on the drawings.

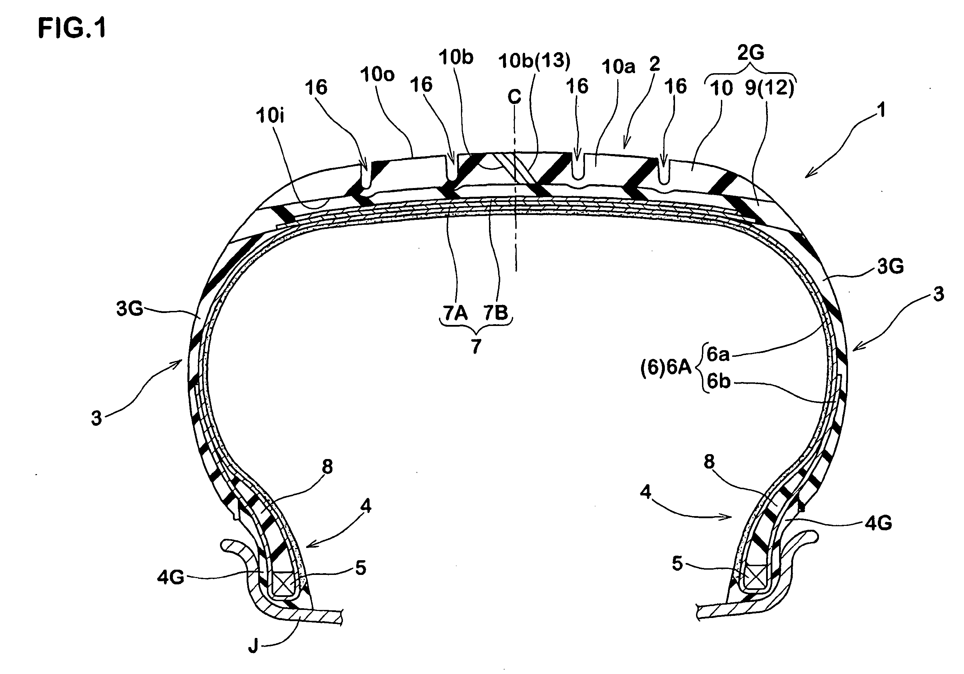

Fig. 1 is a sectional view of a pneumatic tire 1 produced in accordance with a method of the present invention. The pneumatic tire 1 includes a toroidal carcass 6 extending from a tread portion 2 to a bead core 5 of a bead portion 4 through a sidewall portion 3, and a tread reinforcing cord layer 7 disposed outward of the carcass 6 and inside of the tread portion 2.

The carcass 6 comprises one carcass ply 6A of a radial structure for example. The carcass ply 6A includes a toroidal body portion 6a extending between the bead cores 5 and 5 for example, and a pair of folded-back portions 6b which are continuously extended from the both sides of the body portion 6a and folded back from an inner side to an outer side in the axial direction of the tire around the bead core 5. A bead apex rubber 8 extending from the bead core 5 radially outward is disposed between the body portion 6a and the folded-back portion 6b of the carcass ply 6A.

The tread reinforcing cord layer 7 comprises two or more (two, in this example) belt plies 7A and 7B in which metal cords are arranged at an angle of 15 to 40° with respect to a circumferential direction of the tire. A band layer or the like may be provided on the radially outer side of the tire if necessary.

Each of the carcass ply 6A and the belt plies 7A and 7B comprises a cord and a topping rubber which tops with the cord. The topping rubber includes carbon black as filler. Thus, a volume peculiar (inherent) electric resistivity value of the topping rubber is less than 1.0×10⁸ (Ω·cm), and the topping rubber has conductivity. The carcass 6 is provided at its outer side with a sidewall rubber 3G forming a tire covering in the sidewall region. A clinch rubber 4G is disposed in the bead region. An outer end of the clinch rubber 4G in the radial direction of the tire is connected to the sidewall rubber 3G, and an inner end of the clinch rubber 4G in the radial direction of the tire comes into contact with a rim J. These rubbers 3G and 4G has carbon black as filler like a conventional general tire, and has conductivity in which the volume peculiar electric resistivity value thereof is less than 1.0×10⁸ (Ω·cm).

In this specification, to measure the volume peculiar electric resistivity value of rubber, a rubber sample having area of 15 cm x 15 cm, and 2 mm thickness is used. Using the sample, the value is measured under the conditions of impressed voltage of 500 V, temperature of 25°C, moisture of 50%, and an electrical resistance measuring device (ADVANTESTER 8340A) is used.

In the pneumatic tire 1 of this embodiment, a tread rubber 2G is disposed on the outer side of the tread reinforcing cord layer 7 in the radial direction of the tire. The tread rubber 2G of this embodiment comprises two layers, i.e., a base rubber portion 9 superposed on an outer side of the tread reinforcing cord layer 7 in the radial direction of the tire, and an annular cap rubber portion 10 whose inner peripheral surface 10i is in contact with the base rubber portion 9 and outer peripheral surface 10o comes into contact with the road surface.

The base rubber portion 9 is made of conductive rubber composition whose volume peculiar electric resistivity value is less than 1.0×10⁸ (Ω·cm). Opposite side edges of the base rubber portion 9 in the axial direction of the tire are connected to the sidewall rubber 3G. Thus, when the tire is assembled to the rim, the base rubber portion 9 constitutes an inner conductive portion 12 which is brought into electrical conduction with the rim J through the sidewall rubber 3G and the clinch rubber 4G.

The cap rubber portion 10 comprises a non-conductive portion 10a made of non-conductive rubber and constituting a main portion of the cap rubber portion 10, and a conductive portion 10b made of conductive rubber. In this embodiment, as the non-conductive rubber, silica-rich rubber including much silica is used. With such a non-conductive portion 10a, the wet grip performance can be enhanced, the rolling resistance on a dry road surface can be reduced and excellent running performance can be obtained.

A polymer of rubber constituting the non-conductive portion 10a is not limited, but examples of the polymer are natural rubber (NR), butadiene rubber (BR) which is a polymer of butadiene, styrene butadiene rubber (E-SBR) of so-called emulsion polymerization, styrene butadiene rubber (S-SBR) of solution polymerization, composite polyisoprene rubber (IR) which is a polymer of isoprene, nitrile rubber (NBR) which is a copolymer of butadiene and acrylonitrile, and chloroprene rubber (CR) which is a polymer of chloroprene, and these element can be used alone or in combination.

Silica to be mixed in the rubber polymer is not especially limited, but a preferable example of such silica is one having colloidal characteristics in which nitrogen adsorption specific surface (BET) is in a range of 150 to 250 m²/g and an adsorption amount of dibutyl phthalate (DBP) is 180 ml/100 g or more. Such silica is preferable in terms of reinforcing effect of rubber and rubber workability. Bis (triethoxysilylpropy) tetrasulfide and α-mercaptopropyltrimethoxysilane are preferable as silane coupling agent.

The amount of silica to be mixed is preferably 30 parts by weight or more, and more preferably 40 parts by weight or more with respect to 100 parts by weight of rubber polymer. The upper limit is preferably 100 parts by weight or less, more preferably 80 parts by weight or less and still more preferably 60 parts by weight or less. With this amount, it is possible to satisfy both low rolling resistance and wet grip performance at high level.

It is possible to mix carbon black in addition to silica to the rubber of the non-conductive portion 10a as an auxiliary element. The carbon black is of help for appropriately controlling the rubber properties, e.g., rubber elasticity, rubber hardness and the like. In this case, it is preferable that the amount of carbon black to be mixed is smaller than the amount of silica to be mixed, and preferable range is 15 parts by weight or less and more preferably 10 parts by weight or less with respect to 100 parts by weight of rubber polymer. If the amount of carbon black to be mixed exceeds 15 parts by weight, the low rolling resistance obtained by silica is deteriorated, and there is a tendency that the rubber becomes excessively hard, which is not preferable.

As the conductive portion 10b, it is possible to use rubber constituent in which much carbon black is mixed. The conductive portion 10b is diagonally inclined in a meridional cross section of the tire in this example, an outer edge thereof in the radial direction of the tire extends toward the outer peripheral surface 100, and an inner edge thereof in the radial direction of the tire extends toward the inner peripheral surface 10i. The conductive portion 10b forms a conductive path 13 which is continuous from the inner peripheral surface 10i to the outer peripheral surface 10o of the cap rubber portion 10. Thus, the conductive portion 10b brings an inner conductive portion 12 (base rubber portion 9) and a road surface into electric conduction with each other, and can discharge the static electricity accumulated in the vehicle to the ground.

Next, a producing method of the pneumatic tire 1 will be described.

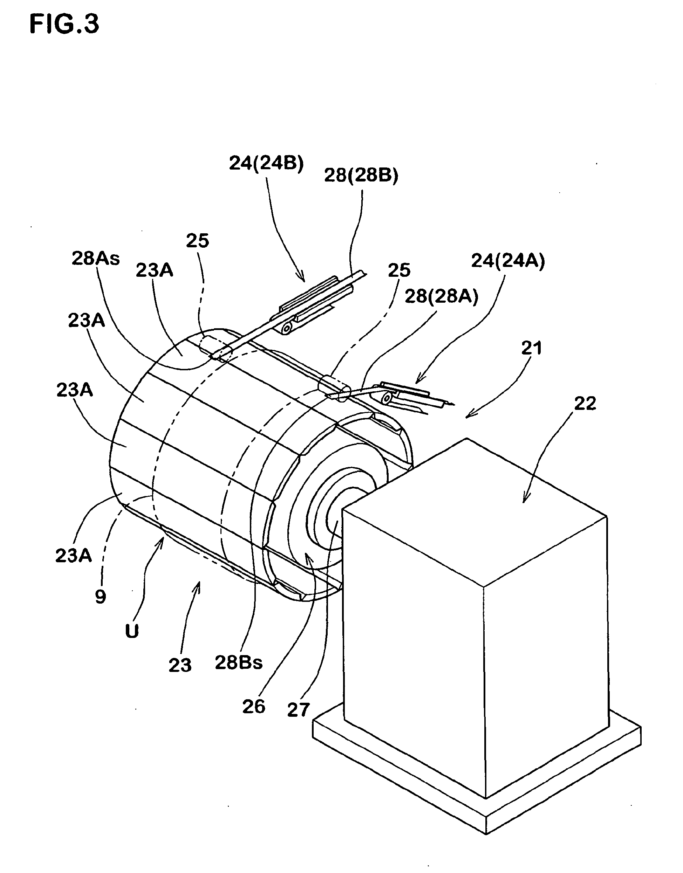

Fig. 3 shows a forming apparatus 21 for carrying out the producing method of the present invention. The forming apparatus 21 includes a base 22, a cylindrical molding former 23 which is rotatably supported by the base 22, and an applicator 24 which guides a rubber strip 28 at a predetermined winding position of the molding former 23.

The base 22 is provided therein with a motor (not shown) and a power transmitting apparatus (not shown) for transmitting a torque of the motor to the molding former 23. The torque of the motor is output to a rotation shaft 27 which is rotatably supported on the side of the base 22.

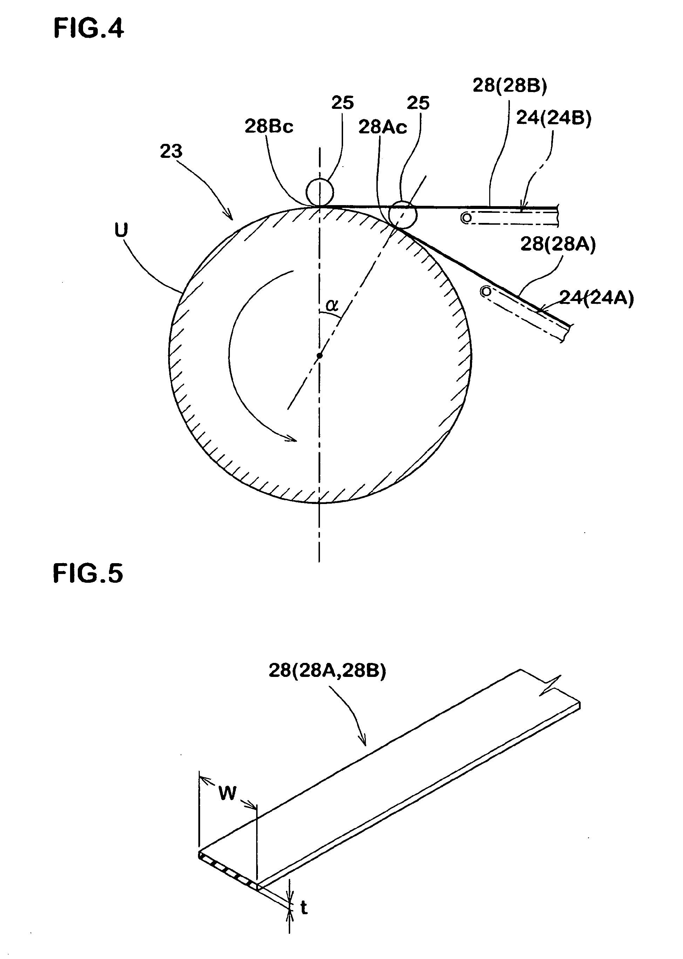

The molding former 23 includes a plurality of segments 23A··· arranged in a circumferential direction of the tire, and a diameter-increasing mechanism (details thereof are not shown) 26 which is provided inside of the segments 23A··· for moving the segments 23A··· inward and outward in the radial direction of the tire. Surfaces of the segments 23A··· are continuously located in the circumferential direction of the tire at positions moved radially outward of the tire by the diameter-increasing mechanism 26. With this, as shown in Fig. 4, a cylindrical forming surface U around which a later-described rubber strip 28 is spirally wound is formed. When it is desired to form a rubber material which previously has a curvature, the forming surface U is formed of a curved surface.

If each of the segments 23A··· is moved radially inward of the tire in a staggered configuration, the forming surface U can be reduced in diameter. This is of help for removing the rubber member wound around the forming surface U from the molding former 23. The diameter-increasing mechanism 26 is fixed to the rotation shaft 27. Therefore, the molding former 23 can turn together with the rotation shaft 27 in a predetermined direction and at predetermined speed. The diameter of the segment 23A is increased or reduced and the rotation speed of the molding former 23 is appropriately adjusted by a controller (not shown).

The applicator 24 comprises a conveyer for example. A transferring surface of the applicator 24 can guide and continuously supply the ribbon-like unvulcanized rubber strip 28 to a predetermined winding position in the forming surface U of the molding former 23. A rubber extruder or calender which continuously extrudes the rubber strip 28, and a festoon (not shown) or the like capable of temporarily controlling the supply speed and the like of the rubber strip can be provided upstream of the applicator 24. The applicator 24 is supported by a three dimensional moving apparatus (not shown) and the applicator 24 can reciprocate at least in an axial direction of the molding former 23.

The applicator 24 includes a first applicator 24A, and a second applicator 24B which is deviated in position in the circumferential direction with respect to the molding former 23. The first applicator 24A can continuously supply the non-conductive rubber strip 28A which shows non-conductivity after the vulcanization to the winding position. The second applicator 24B can continuously supply the conductive rubber strip 28B which shows conductivity after the vulcanization to the winding position. That is, the non-conductive rubber strip 28A and the conductive rubber strip 28B are supplied to the molding former 23 using the independent applicators.

As shown in Fig. 4, the first applicator 24A and the second applicator 24B are deviated in position in the circumferential direction. With this, even when the first and second applicators 24A and 24B are located at the same positions as that of the molding former 23 in the axial direction, the first and second applicators 24A and 24B do not interfere with each other and can guide the rubber strips 28A and 28B, respectively. Therefore, a winding position 28Ac where the non-conductive rubber strip 28A is wound and a winding position 28Bc where the conductive rubber strip 28B is wound are deviated from each other in the circumferential direction at an angle α.

The angle α is not especially limited, but if the angle is excessively wide, a gap between which the first and second applicators 24A and 24B is increased, and the apparatus space is increased. If the angle is excessively small, when the non-conductive rubber strip 28A and the conductive rubber strip 28B pass each other through the overlapping positions in the direction of a circumstance, an inconvenience is prone to be generated due to interference. Thus, it is preferable that the angle α is about 10 to 40°. As shown in Fig. 4, it is preferable that each of the applicators 24A and 24B includes a portion which guides the rubber strip 28 such that the portion extends in a tangent direction of the forming surface U in the side view. This is preferable because excessive external force acting on the rubber strip 28 can be reduced as small as possible.

As shown in Fig. 5 for example, each of the rubber strips 28A and 28B is formed into a ribbon shape having a rectangular cross section in which the width w of the rubber strip is greater than the thickness t thereof. The width w and the thickness t of the rubber strip are not especially limited, but it is preferable that the width is in a range of 15 to 30 mm and the thickness t is in a range of 0.5 to 1.5 mm. When the width w of the rubber strip is less than 15 mm or the thickness t is less than 0.5 mm, the number of windings of the rubber strip 28 is increased and the productivity is deteriorated. On the other hand, when the width w exceeds 30 mm or the thickness t exceeds 1.5 mm, it becomes difficult to form a fine cross section shape. In this embodiment, both the rubber strips 28A and 28B have the same cross section shape.

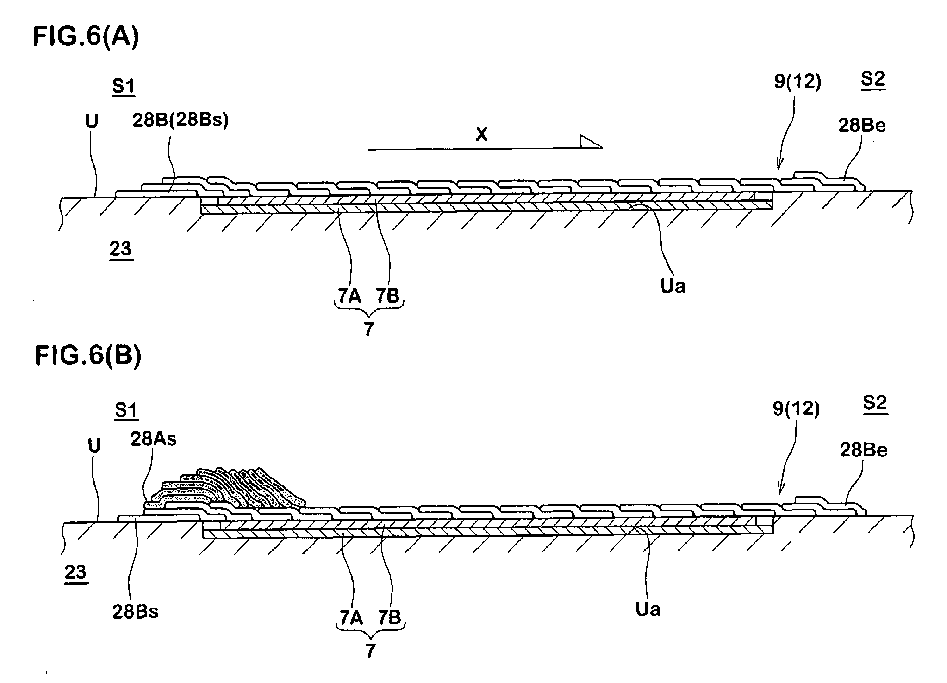

Figs. 6 to 8 show the cap rubber forming steps for forming the cap rubber portion 10 in a time series. In Fig. 6(A), the tread reinforcing cord layer 7 and the base rubber portion 9 are previously disposed on the forming surface U of the molding former 23. The forming surface U of this embodiment is provided with a recess Ua which is equal to the thickness of the tread reinforcing cord layer 7. The recess Ua absorbs the thickness of the tread reinforcing cord layer 7. A winding surface of the base rubber portion 9 disposed outside of the recess Ua is a substantially flat outer peripheral surface. This is of help for enhancing the finishing precision of the base rubber portion 9.

The base rubber portion 9 of this embodiment is formed by spirally winding the conductive rubber strip 28B from one side S1 to the other side S2 in the axial direction using the second applicator 24B. More specifically, a winding-starting end 28Bs of the conductive rubber strip 28B is fixed to the forming surface U using a roller 25 (shown in Figs. 3 and 4) or the like. Next, the second applicator 24B is moved in a direction X of the tire rotational axis while rotating the molding former 23. With this, the conductive rubber strip 28B is spirally wound around the forming surface U, and the base rubber portion 9 forming the inner conductive portion 12 is formed. If the winding operation is completed, the conductive rubber strip 28B is cut, and the winding-ending end 28Be is superposed on and fixed to the other conductive rubber strip 28B.

When the molding former 23 is rotated at a constant speed, the moving speed of the second applicator 24B in the axial direction is controlled. With this, the spiral pitch for winding the conductive rubber strip 28 can be changed. For example, the spiral pitch is reduced by reducing the moving speed of the second applicator 24B. If the superposing width of the adjacent conductive rubber strips 28B and 28B is increased, the thickness of this portion can be increased. On the other hand, if the moving speed of the second applicator 24B is increased, the spiral pitch is increased. If the superposing width of the adjacent conductive rubber strips 28B is reduced or they are separated from each other, the thickness of this portion can be reduced. The spiral pitch, i.e., the moving speed of the applicator is appropriately determined while taking the cross section shapes of the tread rubber and the rubber strip, and the rotation speed of the molding former 23 into consideration. Such information is input to a controller (not shown) which controls the moving speed of the applicators 24A and 24B, and the movement of the applicators 24A and 24B is controlled based on the input information.

Next, the cap rubber forming step is carried out. In the cap rubber forming step, the base rubber portion 9 forming the inner conductive portion 12 which is previously wound around the molding former 23 is used as the to-be-wound body 15, and the strips 28A and 28B are wound around the outer sides thereof. Alternatively, a tire raw base body comprising a toroidal swelled carcass and the inner conductive portion 12 disposed outside of the carcass may be used as the to-be-wound body and the strips may be wound directly around the to-be-wound body.

In the cap rubber forming step, the starting end 28As of the non-conductive rubber strip 28A is fixed onto the base rubber portion 9. Then, it is wound up to a predetermined width in the axial direction and then, the winding operation is once stopped. That is, both the axial movement of the second applicator 24A and the rotation of the molding former 23 are stopped.

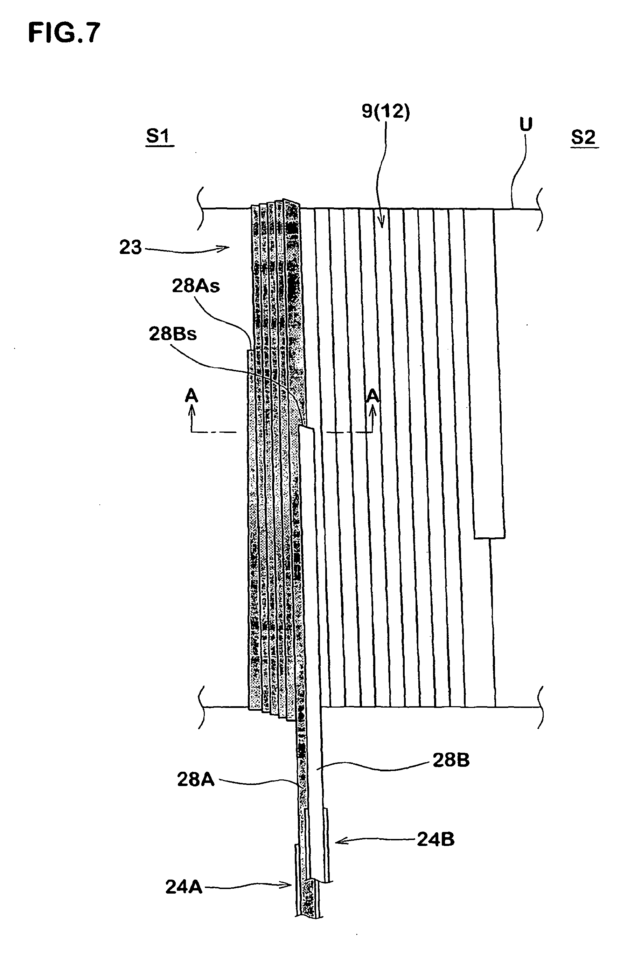

Next, as shown in Fig. 7, the conductive rubber strip 28B is guided by the second applicator 24B, one end 28Bs of the conductive rubber strip 28B is superposed on the wound non-conductive rubber strip 28A. At least a portion of the conductive rubber strip 28B is brought into contact with and fixed to the base rubber portion 9. At that time the first and second applicators 24A and 24B are deviated in position in the circumferential direction as shown in Fig. 4. With this, even when the first and second applicators 24A and 24B are in the same position in the axial direction of the molding former 23 as shown in Fig. 7, they do not interfere with each other as described above.

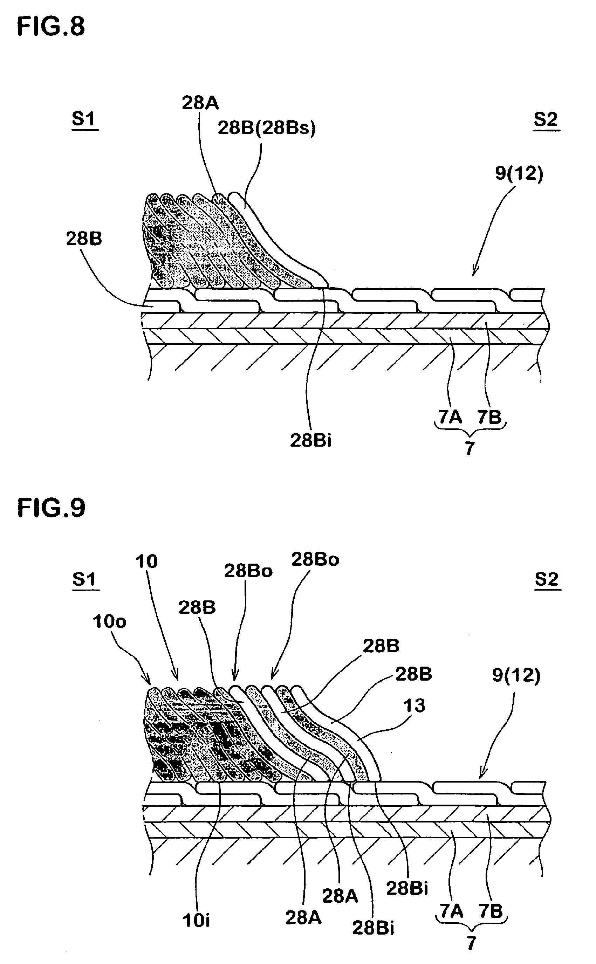

Fig. 8 is a sectional view taken along the line A-A in Fig. 7. The conductive rubber strip 28B is superposed on the non-conductive rubber strip 28A such that they are inclined in substantially the same direction in the sectional view, and an inner edge 28Bi is in contact with the base rubber portion 9. Therefore, the conductive rubber strip 28B can be in conduction with the base rubber portion 9.

Next, the superposed non-conductive rubber strip 28A and conductive rubber strip 28B are simultaneously wound around the outer side of the base rubber portion 9 toward the other side S2. In this embodiment, the first and second applicators 24A and 24B are moved in the axial direction at the same speed so that they are wound such that the spiral pitches thereof are substantially the same. As a result, as shown in the sectional view of Fig. 9, the conductive rubber strip 28B and the non-conductive rubber strip 28A are wound around the outer side of the base rubber portion 9 such that they are arranged alternately in the axial direction. In this embodiment, the conductive rubber strip 28B is wound such that the inner edge 28Bi is in contact with the base rubber portion 9. The outer end 28Bo of the conductive rubber strip 28B in the radial direction of the tire is exposed to the outer peripheral surface 10o of the cap rubber portion 10. Therefore, the conductive rubber strip 28B forms the conductive path 13 which is continuous from the inner peripheral surface 10i to the outer peripheral surface 10o of the cap rubber portion 10.

The conductive rubber strip 28B is not especially limited, but it is preferable that it is wound once or more. If the number of windings is less than one, the contact area between the conductive rubber strip 28B and the road surface is small and there is a tendency that the discharging performance of static electricity is lowered. The upper limit of the number of windings of the conductive rubber strip 28B is not especially limited, but if the number of winding is increased, an amount of the non-conductive rubber strip 28A to be used is reduced, it is not preferable because the running performance is deteriorated and the bonding interface between rubbers having different compositions is increased. From such a view point, it is preferable that the number of windings of the conductive rubber strip 28B is five or less, and more preferably four or less.

Next, a conductive path 13 having the predetermined length is formed by the simultaneous winding operation and then, the winding operations of the non-conductive rubber strip 28A and the conductive rubber strip 28B are stopped. That is, the movements of the first and second applicators 24A and 24B and the rotation of the molding former 23 are stopped.

Next, the conductive rubber strip 28B is cut, its end is fixed to the non-conductive rubber strip 28A, and only the non-conductive rubber strip 28A is wound around the base rubber portion 9 toward the other side S2 using the first applicator 24A. Then, the non-conductive rubber strip 28A is cut at an arbitrary position, and its end is appropriately fixed.

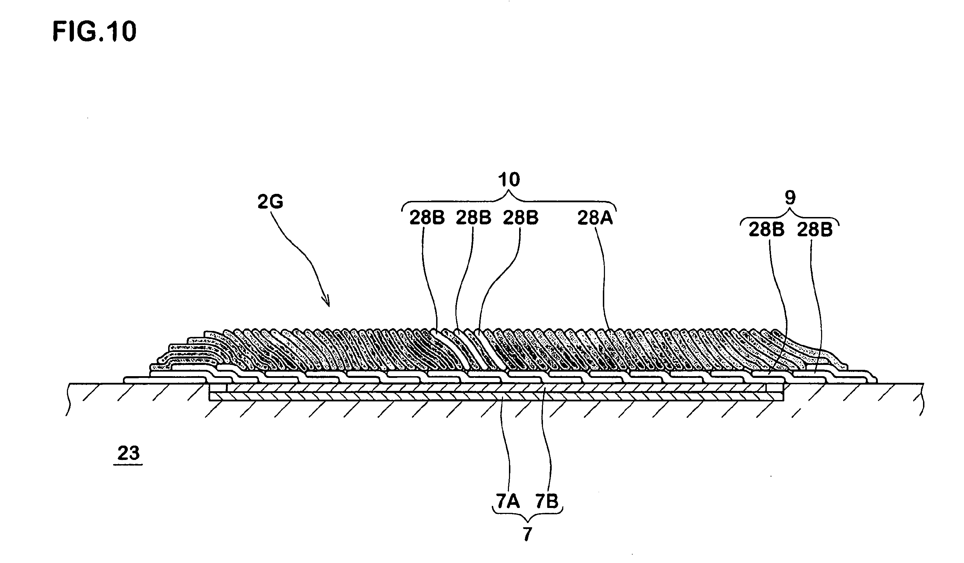

With this, as shown in Fig. 10, the cap rubber portion 10 made of the non-conductive rubber strip 28A and the conductive rubber strip 28B can be formed on the outer side of the base rubber portion 9. In this example, the conductive rubber strip 28B is wound three times around the outer side of the base rubber portion 9. By suppressing the amount conductive rubber strip 28B to the minimum amount that is required for securing the conductivity, it is possible to use more silica rich non-conductive rubber strip 28A. Therefore, excellent running performance such as wet performance and low rolling resistance can be exhibited. The interface area of the rubbers having different compositions is reduced, crack from the interface and rubber crack are reduced, and the durability of the tread rubber is enhanced. The conductive path 13 formed by the conductive rubber strip 28B is continuous in the circumferential direction of the tire, and since the thickness thereof is extremely thin, influence on the deviated wear and running performance can be prevented.

The conductive rubber strip 28B forms the conductive path 13 which is continuous from the inner peripheral surface 10i to the outer peripheral surface 10o of the cap rubber portion 10. In this manner, the tread constituent member made of the tread reinforcing cord layer 7 and the tread rubber 2G is formed. Thereafter, it is removed from the molding former 23 and combined with the toroidal carcass ply and the like. With this, a raw cover is formed, the raw cover is vulcanized and the pneumatic tire shown in Fig. 1 is obtained. The conductive path 13 (conductive portion 10b) of the pneumatic tire 1 is connected to the inner conductive portion 12 which is electrically connected to the rim J. Therefore, static electricity accumulated in the vehicle can efficiently flow from the conductive path 13 to the ground.

The forming position of the conductive path 13 in the invention is not especially limited only except the surface of the circumferential groove 16 extending in the circumferential direction of the tire, but it is preferable that the forming position is a region where the tire can come into contact with the ground stably at the time of straight running and turning. More specifically, the preferable region is a tread center region which is 50% of the tread width around the tire equator C because in such region, the ground-contacting length is long and the tire can come into contact with the road surface stably.

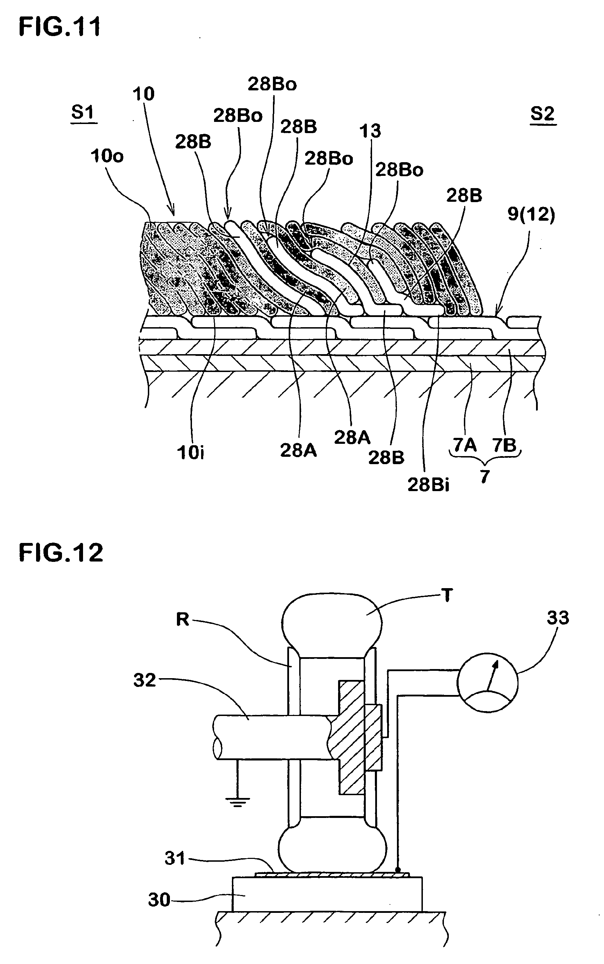

Fig. 11 shows another embodiment of the present invention.

In this embodiment, in the simultaneous winding step in which the non-conductive rubber strip 28A and the conductive rubber strip 28B are simultaneously wound, the spiral pitch of the conductive rubber strip 28B toward the other side S2 is greater than the spiral pitch of the non-conductive rubber strip 28A toward the other side S2. That is, the moving speed of the second applicator 24B in the axial direction is greater than the moving speed of the first applicator 24A in the axial direction.

With this, as shown in Fig. 11, an outer edge 28Bo of the conductive rubber strip 28B is of a spiral shape which is gradually moving toward the other side S2 radially inward of the tire. A phantom surface connecting the outer edge 28Bo is of a truncated cone shape whose radius of curvature is gradually reduced toward the other side S2. In such a conductive path 13 formed by the conductive rubber strip 28B, the inner edge 28Bi of the conductive rubber strip 28B can come into contact with the base rubber portion 9 which forms the inner conductive portion 12 more widely in the other side S2 in the radial direction of the tire and thus, the reliability of the conductive path 13 is enhanced, and the exposure of the conductive rubber strip 28B to the ground-contact surface can be suppressed as small as possible. Therefore, as compared with the previous embodiment, it is possible to provide a pneumatic tire in which characteristics of the non-conductive rubber strip 28A are exhibited more excellently.

As the cap rubber portion 10 of the embodiment is worn, the position of the conductive rubber strip 28B exposed to the outer peripheral surface 100 which comes into contact with the road surface is changed in the circumferential direction and the axial direction of the tire. Therefore, a portion of the tire in the vicinity of the conductive rubber strip 28B is less prone to be worn intensively, and the wear resistance is enhanced. Although the inner conductive portion 12 is made of the base rubber portion 9 in the above two embodiments, the inner conductive portion may be omitted and a cap rubber portion can be formed on the outer side of the tread reinforcing cord layer 7 of course. Although the preferred embodiments of the present invention have been described above, the invention is not limited to the illustrated embodiments, and the invention can variously be modified and carried out.

### Examples

Pneumatic tires (size: 225/55R16) having the basic structure shown in Fig. 1 and in which tread rubbers (cap rubber portion and base rubber portion) were formed by the strip winding method were prototyped based on the specification shown in Table 1. Then, the rolling resistance and electrical resistance of the tires were measured. Other parameters except those shown in Table 1 are the same among the tires.

Tread rubber portions (cap rubber portions) of the tires of the present invention and comparative examples were formed by the strip winding method, and rubber compositions of the rubber strips are shown in Table 2.

The test method is as follows:

### <Rolling resistance>

The rolling resistance was measured using a rolling resistance tester under the following conditions. The evaluation was made while determining an index of the conventional example 1 as being 100. The smaller the numerical value, the smaller the rolling resistance is and the result is more excellent.
Rim: 16 × 7JJ
Internal pressure: 200 kPa
Load: 4.7 kN
Speed: 80 km/h

### <Electrical resistance of tire>

A measuring apparatus shown in Fig. 12 was used. The measuring apparatus includes a metal plate 31 (electrical resistance value is 10 Ω or less) having a polished surface which is disposed on an insulative plate 30 (electrical resistance value is 10¹² Ω or higher), a conductive tire mounting shaft 32 which holds an assembly of the tire and rim, and an electrical resistance measuring device 33. The electrical resistance value of the assembly of the tire and rim was measured in keeping with the JATMA standard. In each tire T, a surface mold releasing agent and contamination were sufficiently removed and the surface was sufficiently dried. Other conditions are as follows:
Rim: aluminum alloy 16 × 7JJ
Internal pressure: 200 kPa
Load: 5.3 kN
Test environment temperature (test room temperature): 25°C
Moisture: 50%
Measuring range of electrical resistance measuring device: 10³ to 1.6 × 10¹⁶ Ω
Test voltage (applied voltage): 1000 V

The test manners are as follows:
(1) The tire T was mounted on a rim to prepare a tire/rim assembly. At that time, soapy water was used as lubricant agent on contact portions therebetween.
(2) The tire/rim assembly was left for two hours in the test room and then, the assembly was mounted on the tire mounting shaft 33.
(3) The load was applied to the tire/rim assembly for 0.5 minutes. After release of the load, the load was again applied to the tire/rim assembly for 0.5 minutes. Further, after release of the load, the load was again applied to the tire/rim assembly for two minutes.
(4) The test voltage was applied, five minutes were elapsed thereafter and then, the electrical resistance value between the tire mounting shaft 32 and the metal plate 31 was measured using the electrical resistance measuring device 33. The measurement was carried out at four locations in the circumferential direction of the tire through 90°, and the maximum value among them was defined as an electrical resistance value (measured value) of the tire T.

Table 1 shows the test result, and Table 2 shows composition of the rubber.

**Table 1**

| | Conventional Example 1 | Conventional Example 2 | Example 1 | Example 2 | Example 3 | Example 4 |
|---|---|---|---|---|---|---|
| <Specification of cap rubber portion> | | | | | | |
| • Main composition | Composition A | Composition B | Composition A | Composition A | Composition A | Composition A |
| • Presence or absence of conductive rubber strip | Absence | Absence | Presence (composition B) | Presence (composition B) | Presence (composition B) | Presence (composition B) |
| • Number of windings of conductive rubber strip | - | - | 1 | 3 | 5 | 7 |
| Rolling resistance (index) | 100 | 120 | 100 | 100 | 101 | 103 |
| Electrical resistance of tire (×10⁸Ω) | 2.4 | 0.6 | 0.6 | 0.3 | 0.2 | 0.2 |

**Table 2**

| | Composition A | Composition B |
|---|---|---|
| Rubber base material | | |
| • SBR | 80 | 80 |
| • BR | 20 | 20 |
| Silica | 50 | 10 |
| Carbon black | 10 | 50 |
| Zinc oxide | 3.0 | 3.0 |
| Stearic acid | 2.0 | 2.0 |
| Antioxidant | 2.0 | 2.0 |
| Aroma oil | 20 | 20 |
| Sulfur | 1.5 | 1.5 |

As a result of the test, even if tread rubber portions (cap rubber portions) of the tires of the present invention were formed by the strip winding method, it can be confirmed that the electrical resistance of the tire can be suppressed to low level while maintaining the excellent low rolling resistance.

## Claims

1. A method for producing a pneumatic tire (1) in which its tread portion (2) includes an inner conductive portion (9) which is in conduction with a rim (J) when the rim (J) is assembled, and an annular cap rubber portion (10) whose inner peripheral surface (10i) is in contact with the inner conductive portion (9) and whose outer peripheral surface (10o) comes into contact with a road surface, the method comprising
a cap rubber forming step for forming a cylindrical unvulcanized cap rubber portion (10) by spirally winding a ribbon-like unvulcanized rubber strip (28) around a center shaft of a substantially cylindrical to-be-wound body (15), wherein
a molding machine (21) used in the cap rubber forming step includes
a first applicator (24A) for guiding a non-conductive rubber strip (28A) made of a rubber which is non-conductive after vulcanization to a winding position of the to-be-wound body (15), and
a second applicator (24B) for guiding a conductive rubber strip (28B) made of a rubber which is conductive after vulcanization to the winding position of the to-be-wound body,
the cap rubber forming step includes a step for winding the non-conductive rubber strip (28A) alone around the to-be wound body (15), a simultaneous winding step for simultaneously winding the non-conductive rubber strip (28A) and the conductive rubber strip (28B) around the to-be-wound body (15) to achieve five or less windings of the conductive rubber strip (28B), a step for cutting the conductive rubber strip (28B) and a step for further winding only the non-conductive strip (28A), and
in the simultaneous winding step, the conductive rubber strip (28B) is wound so as to form a conductive path (13) which is continuous from the inner peripheral surface (10i) to the outer peripheral surface (10o) of the cap rubber portion (10).

2. The method of claim 1, wherein the cap rubber forming step comprises
a step for winding the non-conductive rubber strip (28A) from an outer side of the to-be-wound body (15) and from one side (S1) in an axial direction toward the other side (S2),
a step for stopping the winding of the non-conductive rubber strip (28A), and
a step for superposing the conductive rubber strip (28B) on the non-conductive rubber strip (28A) and fixing at least a portion (28Bi) of the conductive rubber strip (28B) to the to-be-wound body (15) such that the portion comes into contact with the to-be-wound body (15), and
in the simultaneous winding step, the superposed non-conductive rubber strip (28A) and conductive rubber strip (28B) are simultaneously wound around the to-be-wound body (15) toward the other side (S2).

3. The method of claim 2, wherein
the cap rubber forming step further comprises
a step for stopping the winding of the non-conductive rubber strip (28A) and the conductive rubber strip (28B) after the conductive path (13) is formed in the simultaneous winding step, and
a step for cutting the conductive rubber strip (28B) and winding only the non-conductive rubber strip (28A) around the to-be-wound body (15) toward the other side (S2).

4. The method of any one of claims 1 to 3, wherein
in the simultaneous winding step, a spiral pitch of the conductive rubber strip (28B) is greater than a spiral pitch of the non-conductive rubber strip (28A).

5. The method of any one of claims 1 to 4, wherein
the inner conductive portion (9) is a tread reinforcing cord layer (7) including at least a belt layer (7A, 7B) or a conductive base rubber portion disposed outside of the tread reinforcing cord layer (7).

6. The method of any one of claims 1 to 5, wherein
the to-be-wound body (15) is an inner conductive portion (12) which is previously wound around a molding former (23).

## Patentansprüche

1. Verfahren zum Herstellen eines Luftreifens (1), dessen Laufflächenabschnitt (2) einen inneren leitfähigen Abschnitt (9), der mit einer Felge (J) leitend verbunden ist, wenn die Felge (J) montiert ist, und einen ringförmigen Deckkautschukabschnitt (10) umfasst, dessen Innenumfangsfläche (10i) mit dem inneren leitfähigen Abschnitt (9) in Kontakt steht, und dessen Außenumfangsfläche (10o) mit einem Straßenbelag in Kontakt kommt, wobei das Verfahren umfasst
einen Deckkautschuk-Bildungsschritt zum Bilden eines zylindrischen unvulkanisierten Deckkautschukabschnitts (10), indem ein bandartiger unvulkanisierter Kautschukstreifen (28) um eine Mittelwelle eines im Wesentlichen zylindrischen, zu bewickelnden Körpers (15) spiralförmig gewickelt wird, wobei
eine Formungsmaschine (21), die bei dem Deckkautschukbildungsschritt verwendet wird,
eine erste Auftragsvorrichtung (24A) zum Führen eines nicht leitfähigen Kautschukstreifens (28A), der aus Kautschuk hergestellt ist, der nach der Vulkanisation nicht leitfähig ist, zu einer Wickelposition des zu bewickelnden Körpers (15), und
eine zweite Auftragsvorrichtung (24B) zum Führen eines leitfähigen Kautschukstreifens (28B), der aus Kautschuk hergestellt ist, der nach der Vulkanisation leitfähig ist, zu der Wickelposition des zu bewickelnden Körpers umfasst,
wobei der Deckkautschukbildungsschritt einen Schritt zum Wickeln des nicht leitfähigen Kautschukstreifens (28A) alleine um den zu bewickelnden Körper (15) herum, einen Simultanwickelschritt zum gleichzeitigen Wickeln des nicht leitfähigen Kautschukstreifens (28A) und des leitfähigen Kautschukstreifens (28B) um den zu bewickelnden Körper (15) herum, um fünf oder weniger Wicklungen des leitfähigen Kautschukstreifens (28B) zu erreichen, und einen Schnitt zum Schneiden des leitfähigen Kautschukstreifens (28B) und einen Schritt zum weiteren Wickeln von nur dem nicht leitfähigen Streifen (28A) umfasst, und
in dem Simultanwickelschritt der leitfähige Kautschukstreifen (28B) derart gewickelt wird, dass eine leitfähige Strecke (13) gebildet wird, die von der Innenumfangsfläche (10i) zu der Außenumfangsfläche (10o) des Deckkautschukabschnitts (10) durchgehend ist.

2. Verfahren nach Anspruch 1, wobei der Deckkautschukbildungsschritt umfasst
einen Schritt zum Wickeln des nicht leitfähigen Kautschukstreifens (28A) von einer Außenseite des zu bewickelnden Körpers (15) und von einer Seite (S1) in einer axialen Richtung zu der anderen Seite (S2) hin,
einen Schritt zum Stoppen des Wickelns des nicht leitfähigen Kautschukstreifens (28A), und
einen Schritt zum Überlagern des leitfähigen Kautschukstreifens (28B) über den nicht leitfähigen Kautschukstreifen (28A) und zum Befestigen zumindest eines Abschnitts (28Bi) des leitfähigen Kautschukstreifens (28B) an dem zu bewickelnden Körper (15), so dass der Abschnitt mit dem zu bewickelnden Körper (15) in Kontakt gelangt, und
wobei in dem Simultanwickelschritt der überlagerte, nicht leitfähige Kautschukstreifen (28A) und der leitfähige Kautschukstreifen (28B) gleichzeitig um den zu bewickelnden Körper (15) zu der andern Seite (S2) hin gewickelt werden.

3. Verfahren nach Anspruch 2, wobei
der Deckkautschukbildungsschritt ferner umfasst
einen Schritt zum Stoppen des Wickelns des nicht leitfähigen Kautschukstreifens (28A) und des leitfähigen Kautschukstreifens (28B) nachdem die leitfähige Strecke (13) in dem Simultanwickelschritt gebildet worden ist, und
einen Schritt zum Abschneiden des leitfähigen Kautschukstreifens (28B) und zum Wickeln nur des nicht leitfähigen Kautschukstreifens (28A) um den zu bewickelnden Körper (15) herum zu der anderen Seite (S2) hin.

4. Verfahren nach einem der Ansprüche 1 bis 3, wobei
in dem Simultanwickelschritt eine Spiralensteigung des leitfähigen Kautschukstreifens (28B) größer ist als die Spiralensteigung des nicht leitfähigen Kautschukstreifens (28A).

5. Verfahren nach einem der Ansprüche 1 bis 4, wobei
der innere leitfähige Abschnitt (9) eine Laufflächenverstärkungskordschicht (7), die zumindest eine Gürtelschicht (7A, 7B) umfasst, oder ein leitfähiger Basiskautschukabschnitt ist, der außerhalb der Laufflächenverstärkungskordschicht (7) angeordnet ist.

6. Verfahren nach einem der Ansprüche 1 bis 5, wobei
der zu bewickelnde Körper (15) ein innerer leitfähiger Abschnitt (12) ist, der zuvor um eine Formteilaufbautrommel (23) herum gewickelt worden ist.

## Revendications

1. Procédé pour produire un bandage pneumatique (1) dans lequel sa partie de bande de roulement (2) comprend une partie conductrice interne (9) qui est en conduction avec une jante (J) lorsque la jante (J) est assemblée, et une partie de caoutchouc de chape annulaire (10) dont la surface périphérique interne (10i) est en contact avec la "partie conductrice interne (9) et dont la surface périphérique externe (10o) vient en contact avec la surface de la route, le procédé comprenant :
une étape de formation de caoutchouc de chape pour former une partie de caoutchouc de chape non vulcanisé cylindrique (10) en enroulant en spirale une bande de caoutchouc non vulcanisé en forme de ruban (28) autour d'un arbre central d'un corps sensiblement cylindrique à enrouler (15), dans lequel :
une machine de moulage (21) utilisée lors de l'étape de formation de caoutchouc de chape comprend: un premier applicateur (24A) pour guider une bande de caoutchouc non conducteur (28A) réalisée avec un caoutchouc qui est non conducteur après la vulcanisation vers une position d'enroulement du corps à enrouler (15), et
un second applicateur (24B) pour guider une bande de caoutchouc conducteur (28B) réalisée avec un caoutchouc qui est conducteur après la vulcanisation, jusqu'à une position d'enroulement du corps à enrouler,
l'étape de formation de caoutchouc de chape comprend une étape consistant à enrouler la bande de caoutchouc non conducteur (28A) seule autour du corps à enrouler (15), une étape d'enroulement simultané consistant à enrouler simultanément la bande de caoutchouc non conducteur (28A) et la bande de caoutchouc conducteur (28B) autour du corps à enrouler (15) pour obtenir cinq enroulements ou moins de la bande de caoutchouc conducteur (28B), une étape consistant à couper la bande de caoutchouc conducteur (28B) et une étape consistant à continuer à enrouler uniquement la bande non conductrice (28A), et
lors de l'étape d'enroulement simultané, la bande de caoutchouc conducteur (28B) est enroulée afin de former un passage conducteur (13) qui est continu à partir de la surface périphérique interne (10i) jusqu'à la surface périphérique externe (10o) de la partie de caoutchouc de chape (10).

2. Procédé selon la revendication 1, dans lequel l'étape de formation de caoutchouc de chape comprend :
une étape consistant à enrouler la bande de caoutchouc non conducteur (28A) à partir d'un côté externe du corps à enrouler (15) et à partir d'un côté (S1) dans une direction axiale vers l'autre côté (S2),
une étape consistant à arrêter l'enroulement de la bande de caoutchouc non conducteur (28A), et une étape consistant à superposer la bande de caoutchouc conducteur (28B) sur la bande de caoutchouc non conducteur (28A) et à fixer au moins une partie (28Bi) de la bande de caoutchouc conducteur (28B) sur le corps à enrouler (15) de sorte que la partie vient en contact avec le corps à enrouler (15), et
lors de l'étape d'enroulement simultané, la bande de caoutchouc non conducteur (28A) et la bande de caoutchouc conducteur (28B) superposées, sont enroulées simultanément autour du corps à enrouler (15) vers l'autre côté (S2).

3. Procédé selon la revendication 2, dans lequel :
l'étape de formation de caoutchouc de chape comprend en outre:
une étape consistant à arrêter l'enroulement de la bande de caoutchouc non conducteur (28A) et de la bande de caoutchouc conducteur (28B) après avoir formé le passage conducteur (13) lors de l'étape d'enroulement simultané, et
une étape consistant à couper la bande de caoutchouc conducteur (28B) et enrouler uniquement la bande de caoutchouc non conducteur (28A) autour du corps à enrouler (15) vers l'autre côté (S2).

4. Procédé selon l'une quelconque des revendications 1 à 3, dans lequel :
lors de l'étape d'enroulement simultané, un écartement de spirale de la bande de caoutchouc conducteur (28B) est supérieur à un écartement de spirale de la bande de caoutchouc non conducteur (28A).

5. Procédé selon l'une quelconque des revendications 1 à 4, dans lequel :
la partie conductrice interne (9) est une couche de cordes de renforcement de bande de roulement (7) comprenant au moins une couche de ceinture (7A, 7B) ou une partie de caoutchouc de base conducteur disposée à l'extérieur de la couche de cordes de renforcement de bande de roulement (7).

6. Procédé selon l'une quelconque des revendications 1 à 5, dans lequel :
le corps à enrouler (15) est une partie conductrice interne (12) qui est préalablement enroulée autour d'un formeur de moulage (23).
